Europäisches Patentamt

European Patent Office

Office européen des brevets

(11) Publication number: **0 477 016 B1**

## EUROPEAN PATENT SPECIFICATION

(45) Date of publication of patent specification: **10.05.95**    (51) Int. Cl.6: **B60C 9/22**

(21) Application number: **91308561.9**

(22) Date of filing: **19.09.91**

(54) **Motorcycle radial tyre.**

(30) Priority: **21.09.90 JP 253817/90**
**16.07.91 JP 202333/91**

(43) Date of publication of application:
**25.03.92 Bulletin 92/13**

(45) Publication of the grant of the patent:
**10.05.95 Bulletin 95/19**

(84) Designated Contracting States:
**DE FR GB**

(56) References cited:
**EP-A- 0 414 470        DE-A- 3 535 064**
**FR-A- 2 285 255        FR-A- 2 405 148**
**GB-A- 2 061 202        LU-A- 52 591**
**US-A- 4 773 462**

(73) Proprietor: **SUMITOMO RUBBER INDUSTRIES LIMITED**
**1-1 Tsutsuicho 1-chome**
**Chuo-ku**
**Kobe-shi**
**Hyogo-ken (JP)**

(72) Inventor: **Suzuki, Shigehiko**
**15-1-109, Minami-mukonoso 7-chome**
**Amagasaki-shi,**
**Hyogo-ken (JP)**
Inventor: **Yasui, Itsuo**
**2-12, Goumencho**
**Nishinomiya-shi,**
**Hyogo-ken (JP)**

(74) Representative: **Stewart, Charles Geoffrey**
**SP TYRES UK LIMITED**
**Technical Division**
**Fort Dunlop,**
**Erdington,**
**Birmingham B24 9OT (GB)**

**Description**

The present invention relates to a pneumatic tyre, more particularly a belted radial ply tyre for motorcycle use.

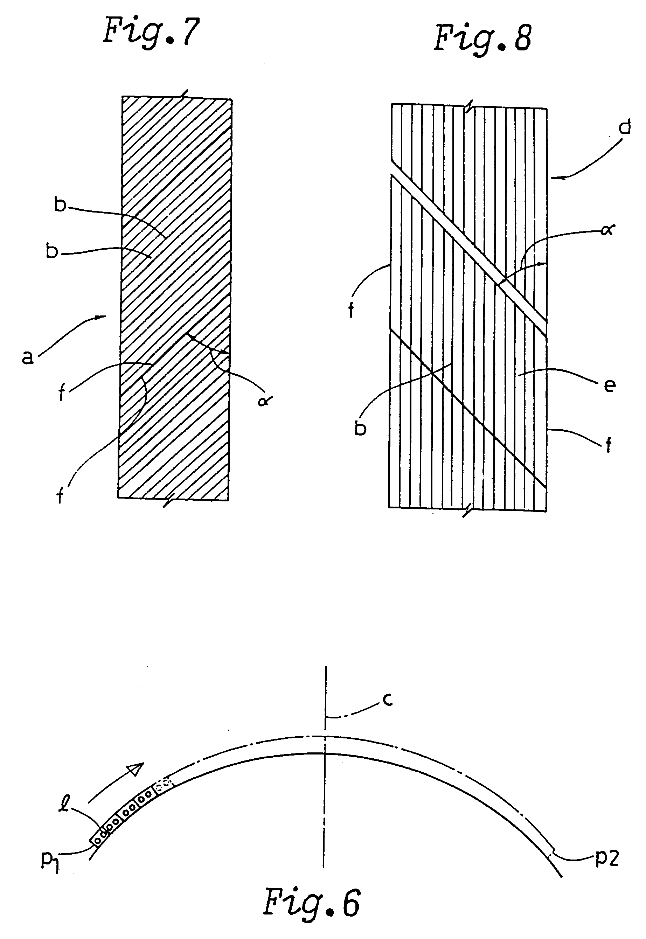

In general, although requirements for motorcycle tyres, especially during cornering, are quite different from those for four-wheeled vehicle tyres, motorcycle radial tyres are made according to a method similar to those for four-wheeled vehicle tyres. That is, as shown in Figures 7 and 8, a belt reinforcement (a) which is disposed radially outside the radial carcass to reinforce the tread portion, has been made as follows: a sheet of tyre fabric (d) usually unwoven fabric in which belt cords (b) are laid parallel with each other, is bias cut at a certain angle $\alpha$ into strips of fabric (e) having a width corresponding to the belt width; a strip of fabric (e) is wound around the carcass; and the bias cut ends (f) of the wound fabric are joined by overlapping a certain circumferential length.

With such a conventional belt structure and belt making method, the recent severe requirements can not be achieved. Steering stability during straight running is inferior due to the bias cut joint, and also steering stability during cornering is inferior. These factors are especially notable during high speed running. Further, high speed durability is not satisfactory.

To solve such problems, an endless belt has been proposed in Japanese Utility Model Publication No.58-160805, wherein the belt is, as shown in Figure 6, formed by spirally winding a belt cord (1) continuously from the axial edge p1 to the opposed axial edge p2 of the belt. Such a cord winding operation consumes much time and tyre production efficiency is low, and further uniformity of the belt is liable to be lost.

A motorcycle tyre having the features of the preamble of claim 1 is known, for example, from DE-A-3535064.

A motorcycle tyre wherein the height of the bead apex is 0.48 of the tread edge height is known from US-A-4773462.

It is therefore, an object of the present invention to provide a motorcycle radial tyre, in which steering stability during high speed running and production efficiency are both improved.

According to one aspect of the present invention, a motorcycle radial tyre comprising a pair of bead cores disposed one in each bead portion, a carcass extending between the bead portions and turned up around the bead cores, said carcass having at least one ply of cords arranged radially at an angle of 70 to 90 degrees with respect to the tyre equator, a belt disposed radially outside the carcass and inside a tread, and a bead apex disposed between each turned up portion and the main portion of the carcass and extending radially outwardly one from each bead core, the height of the carcass turned up portions from the bead base line being more than 0.2 times and less than 0.5 times the height of the tread edges from the bead base line, said belt comprises a plurality of axially divided pieces, each belt piece being a spiral winding of a ribbon of rubber in which at least one cord is embedded, with a small inclination angle with respect to the tyre equator in the same winding direction as the other belt piece or pieces, characterised in that there are four belt pieces two either side of the centre of the tyre, and the cords of all the belt pieces are wound in the same direction around the tyre and the height of the radially outer edge of the bead apex from the bead base line is more than 0.2 times and not more than 0.5 times said tread edge height.

There may be two belt pieces each of which comprises substantially half the belt width or there may be four, two either side of the centre line of the tyre.

Preferably the belt width is in the range 0.7 to 1.0 times the tread width.

Another aspect of the invention provides a method of making a belt for a motorcycle tyre, said belt disposed radially outside a carcass and inside a tread and comprising a plurality of axially divided pieces, the Method being characterised by the steps of attaching one end of each of the ribbons of rubber to axially spaced positions on a rotatably mounted cylindrical tyre carcass each ribbon of rubber having therein at least one belt cord along the longitudinal direction thereof, said axially spaced positions of each ribbon being axially to the same side of the tyre, and rotating the carcass while supplying ribbons towards the cyclindrical tyre carcass and at the same time moving the supplied ribbons sideways of the carcass along the axis of the tyre face, so that all of the ribbons are wound in the same winding direction, and all the belt cords in the windings have small inclination angles of not more than 10 degrees with respect to the tyre equator.

Embodiments of the present invention will now be described in detail by way of example only,in conjunction with the accompanying drawings, in which:

Figure 1 is a sectional view of a tyre of the present invention;

Figure 2 is a developed plan view of the carcass and belt thereof;

Figure 3 is an enlarged sketchy perspective view of a ribbon used to form the belt;

Figure 4 is a cross sectional view showing a method of making the belt;

Figure 5 is a cross sectional view showing a modification of the belt and a method of making the same;

Figure 6 is a cross sectional view showing the belt and method according to a prior art;

Figures 7 and 8 are plan views showing thy conventional belt and method.

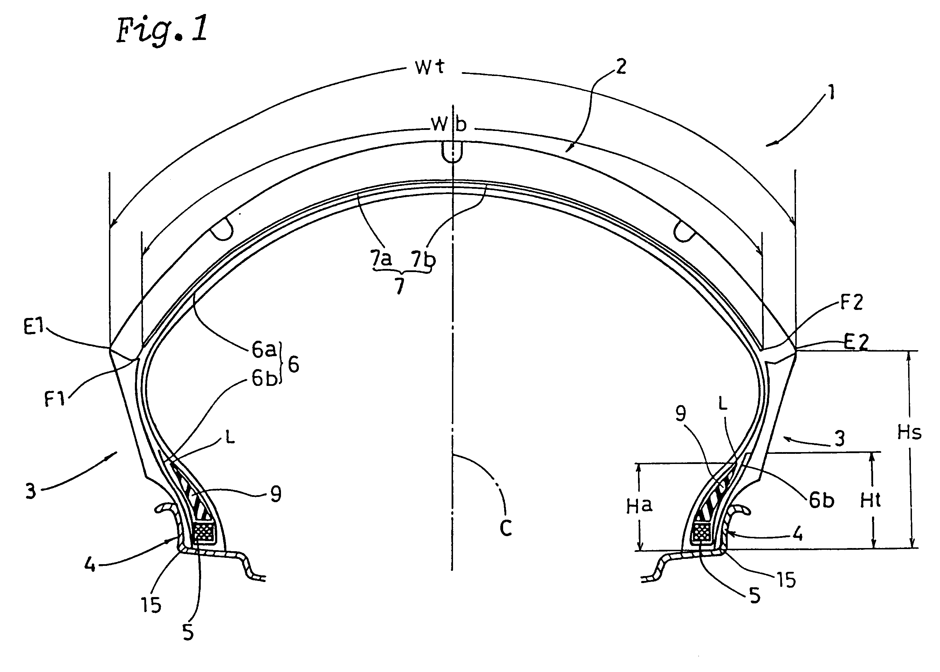

In Figures 1 to 4, a motorcycle radial tyre 1 has a tread portion 2, a pair of axially spaced bead portions 4, and a pair of sidewall portions 3 extending between the tread edges E1 and E2 and the bead portions.

The tread portion 2 is curved with a single radius of curvature so that the maximum cross section width of the tyre lies between the tread edges E1 and E2.

A pair of bead cores 5 is disposed one in each of the bead portions 4, a carcass 6 extends between the bead portions and is turned up around the bead cores 5 from the axially inside to outside thereof to form turned up portions 6b and a main portion 6a therebetween. A belt reinforcement 7 is disposed radially outside the carcass 6 and inside a rubber tread 2, and a bead apex 9 is disposed between each carcass turned up portion 6b and the carcass main portion 6a.

The carcass 6 comprises at least one ply of cords arranged radially at an angle of 70 to 90 degrees with respect to the tyre equator C.

The carcass has a profile such that the crown portion is curved substantially being generally parallel with the curved tread face.

For the carcass cords, organic fibre cords, e.g. nylon, rayon, polyester, aromatic polyamide or the like may be used.

The carcass turned up portion 6b has a radial height Ht of more than 0.2 times and less than 0.5 times the radial height Hs of the tread edges E1 and E2, both measured from the bead base line 15, whereby bending deformation of the bead portions is mitigated and bead durability is improved while maintaining the ride comfort.

If the turnup height Ht is not more than 0.2 times the tread edge height Hs, the bead portions are decreased in rigidity and subjected to bending stress, and thereby the bead portions are liable to be cracked, and durability is lost.

If the height Ht is more than 0.5 times the height Hs, the rigidity of the sidewall portions 3 and bead portions 4 is excessively increased and this deteriorates ride comfort.

The belt 7 is disposed radially outside the carcass crown, and the belt has a curved profile similar to that of the carcass crown.

The belt comprises a plurality of axially divided pieces. In this embodiment, the belt 7 is composed of two pieces 7a and 7b divided at the tyre equator C.

Each of the belt pieces 7a and 7b is made of a spirally wound cord or spirally wound parallel cords.

For the belt cord 11, organic fibre cords, e.g. Teflon (Trade Mark), aromatic polyamide, polyester or the like or steel cords, having a high elastic modulus of not less than 600 kgf/sq.mm are used.

If the elastic modulus is less than 600kgf/sq.mm, the tread portion 2 is not provided with rigidity, and high speed straight running performance, high speed cornering performance, durability are impaired.

Preferably, aromatic polyamide fibre cords are used for its light weight and high modulus nature.

The cords of all the belt pieces are wound in the same winding direction. Further, in each belt piece, the windings of the belt cord or cords have a small inclination angle of not more than 10 degrees, more preferably not more than 5 degrees with respect to the tyre equator C.

The belt width Wb measured along the curved belt 7 between its ends F1 and F2 is more than 0.7 times and less than 1.0 times the tread width Wt measured along the curved tread face between its edges E1 and E2.

When the width Wb is not more than 0.7 times Wt, the rigidity in the tread shoulder region is decreased, and steering stability during abrupt cornering is lost.

When the width Wb is not less than 1.0 times Wt, the rigidity of the sidewall portion is excessively increased, and ride comfort is deteriorated.

The above-mentioned bead apex 9 is made of hard rubber and extends radially outwardly from the bead core 5 and tapering to provide a wedge-shaped cross section.

The radial height Ha of the radially outer edge L of the bead apex measured from the bead base line 15 is more than 0.2 times and less than 0.5 times the above-mentioned tread edge height Hs, whereby durability is improved without sacrificing the ride comfort.

If the height Ha is not more than 0.2 times the height Hs, the bending rigidity of the bead portion is decreased to lower the durability.

If the height Ha is more than 0.5 times the height Hs, the rigidity of the sidewall portion 3 and bead portion 4 becomes too increased to lower ride comfort.

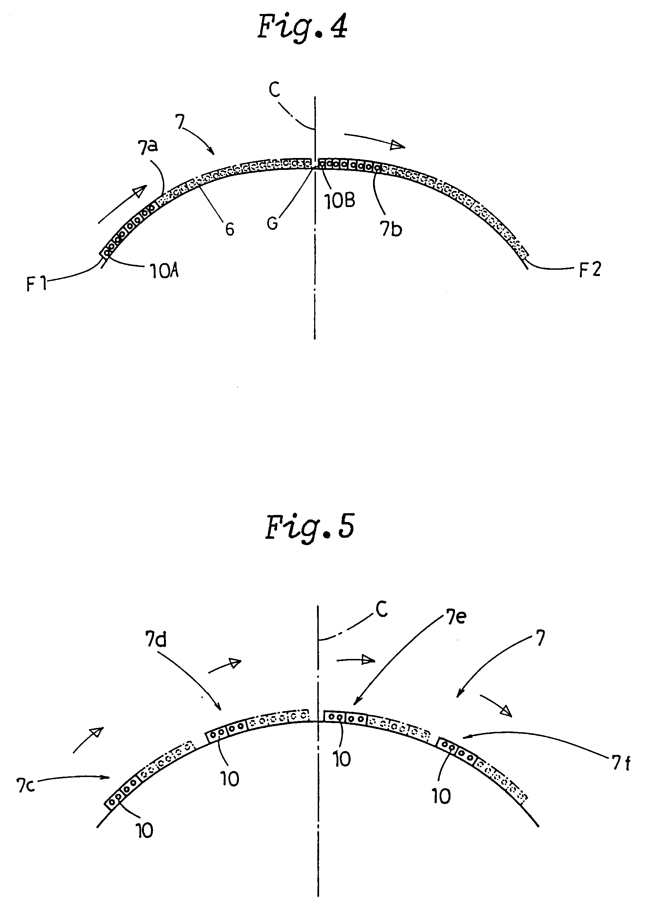

Figure 4 shows a method of making the above-mentioned two-piece belt.

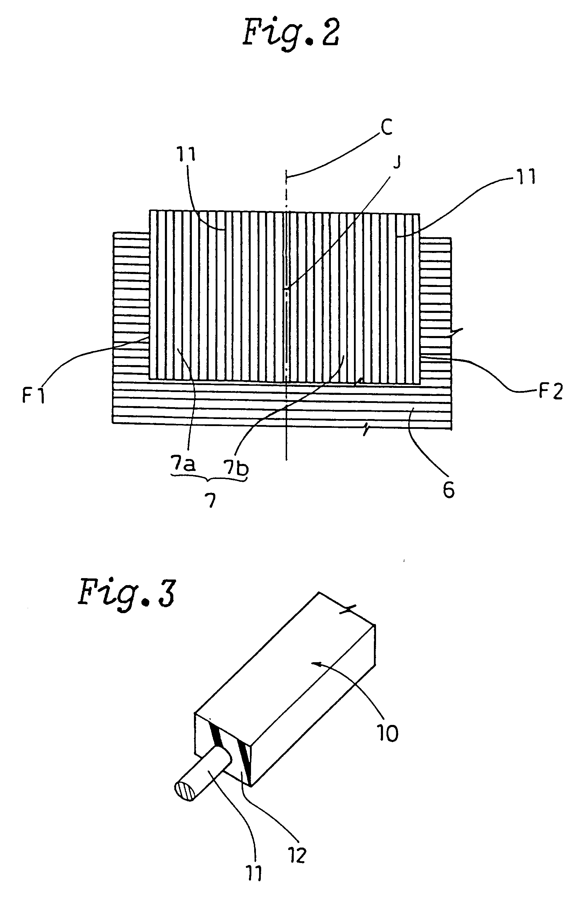

Two ribbons of rubber, in which at least one belt cord 11 is embedded in coating rubber 12 along the length direction of the ribbon 10 as shown in Figure 3, are prepared.

The carcass 6 is shaped into a toroidal shape in advance using a shaping drum, and the carcass is supported rotatably around its axis by a drum.

The ends of two ribbons 10A and 10B are fastened to the outer surface of the carcass at positions F1 and G which are at the same side axial edges, in Figure 4 the left side edges, of the belt pieces 7a and 7b.

The carcass 6 is rotated while supplying the ribbons 10A and 10B towards the carcass, and at the same time, moving the supplied ribbons in the axial direction of the carcass or drum from the above-mentioned starting positions F1 and G to stopping positions G and F2 corresponding to the other side axial edges, in Figure 4 the right side edges, of the belt pieces, so that all of the cords 11 in the ribbons 10A and 10B are wound in the same winding direction, and all of the windings of the belt cords have small inclination angles of not more than 10 degrees with respect to the tyre equator C.

The ribbons are cut and the cut end of the ribbon 10A is joined to the ribbon 10B at a point J at the tyre equator C.

The winding is thus finished and a strip of tread rubber is applied over and around the belt to complete the green tyre.

Accordingly, the ribbon 10A is wound spirally from the position F1 near the left tread edge E1 to the position G near or at the tyre equator C to form the left belt piece 7a.

On the other hand, to form the right belt piece 7b, the ribbon 10B is wound spirally from the position G to the position F2 near the right tread edge E2 in the same winding direction as the ribbon 10A. Therefore, the belt 7 can be formed in a shorter time.

Figure 5 shows a modification of the belt 7. In this example, the belt is composed of four axially divided pieces 7c, 7d, 7e and 7f having the same widths, each of which is formed by spirally winding a ribbon 10 in the same manner as the above-explained former example.

Thus, in the present invention, the belt is composed of a plurality of axially divided pieces. Accordingly, the time for winding the belt cord is reduced, and the production efficiency is improved.

Tyres of size 170/60R17 were prepared. Each test tyre was mounted on its regular rim and inflated to its regular pressure and then tested for the following performance factors. The specifications of the test tyres are given in Table 1.

1) High speed straight running stability and High speed cornering stability

The test tyre was installed on a motorcycle, and was run on a straight course at 260km/Hr. and a 400m radius course at 220km/Hr. to evaluate running stability by a test driver.

The results are indicated by an index based on the assumption that the working example tyre 1 is 100. The larger the value, the better the stability.

2) High speed durability

Using a drum tyre tester the running speed of the test tyre was increased every 20 minutes at steps of 10km/Hr. from an initial speed of 160km/Hr., and the speed at which the tread portion became cracked was measured as the durability. The test tyre load was the maximum load specified by JIS.

The results are indicated by an index based on the assumption that the working example tyre 1 is 100. The larger the value, the better the durability.

3) Belt making time

The total time to make each band inclusive of preparatory time was measured, and is indicated by an index based on the assumption that the reference tyre 1 is 100.

TABLE 1

|  | Ex.1 | Ex.2 | Ref.1 | Ref.2 |
|---|---|---|---|---|
| Carcass Cord | 1 ply nylon 1260d/2 | 1 ply nylon 1260d/2 | 1 ply nylon 1260d/2 | 1 ply nylon 1260d/2 |
| Angle (deg) | 90 | 90 | 90 | 90 |
| Belt Structure Cord | 2 ply Fig.4 aramid 1500d/2 | 2 ply Fig.5 aramid 1500d/3 | 2 ply Fig.6 aramid 1500d/2 | 2 ply Fig.7 aramid 1500d/2 |
| Cord twist/10cm | 30 | 24.5 | 30 | 30 |
| No. of cords in ribbon | 2 | 2 | 2 | --- |
| Stability Straight running | 100 | 100 | 95 | 80 |
| Cornering | 100 | 105 | 95 | 70 |
| Durability | 100 | 100 | 100 | 70 |
| Belt making time | 55 | 30 | 100 | 50 |

In the motorcycle radial tyres according to the present invention, high speed running performance and high speed durability are improved.

Further, according to the above-explained belt making method, the endless belt is made by a shorter time, and it becomes possible to make the tyre efficiently at a lower production cost.

**Claims**

1. A motorcycle radial tyre comprising a pair of bead cores (5) disposed one in each bead portion (4), a carcass (6) extending between the bead portions (4) and turned up around the bead cores (5), said carcass (6) having at least one ply of cords arranged radially at an angle of 70 to 90 degrees with respect to the tyre equator (C), a belt (7) disposed radially outside the carcass (6) and inside a tread (2), and a bead apex (9) disposed between each turned up portion (6b) and the main portion (6a) of the carcass and extending radially outwardly one from each bead core (5), the height (Ht) of the carcass turned up portions (6b) from the bead base line being more than 0.2 times and less than 0.5 times the height (Hs) of the tread edges (E1,E2) from the bead base line, said belt comprises a plurality of axially divided pieces (7a,7b,7c,7d,7e,7f), each belt piece being a spiral winding of a ribbon (10) of rubber in which at least one cord (11) is embedded, with a small inclination angle with respect to the tyre equator (C) in the same winding direction as the other belt piece or pieces (7a-7f), characterised in that there are four belt pieces (7c-7d) two either side of the centre of the tyre (C), and the cords of all the belt pieces (7a-7f) are wound in the same direction around the tyre and the height (Ha) of the radially outer edge of the bead apex (9) from the bead base line is more than 0.2 times and not more than 0.5 times said tread edge height (Hs).

2. A tyre according to any of claims 1 characterised in that the belt width is more than 0.7 and legs than 1.0 times the tread width (Wt) measured along the curved surface of the tread between the edges (E1 & E2).

3. A tyre according to claim 1 or 2 characterised in that the elastic modulus of the cords in the strip is greater than the 600Kg/square cm.

4. A tyre according to any of claims 1 to 3 characterised in that the radial height of the bead apex (9) measured from the bead base line (15) is more than 0.2 and less than 0.5 times the tread edge height (Hs).

5. A method of making a belt (7) for a motorcycle tyre, said belt (7) disposed radially outside a carcass (6) and inside a tread (2) and comprising a plurality of axially divided pieces (7a,7f), the method being characterised by the steps of attaching one end of each of the ribbons (10) of rubber to axially spaced positions on a rotatably mounted cylindrical tyre carcass each ribbon (10) of rubber having therein at least one belt cord (11) along the longitudinal direction thereof, said axially spaced positions of each ribbon (10) being axially to the same side of the tyre, and rotating the carcass while supplying ribbons (10) towards the cylindrical tyre carcass and at the same time moving the supplied ribbons sideways of the carcass along the axis of the tyre face, so that all of the ribbons (10) are wound in the same winding direction, and all the belt cords (11) in the windings have small inclination angles of not more than 10 degrees with respect to the tyre equator.

**Patentansprüche**

1. Ein Motorradradialreifen mit einem Paar von Wulstkernen (5), von denen einer in jedem Wulstbereich (4) angeordnet ist, einer Karkasse (6), die sich zwischen den Wulstbereichen (4) erstrecken und nach oben um die Wulstkerne (5) umgeschlagen sind, wobei die Karkasse (6) mindestens eine Einlage von Korden hat, die radial unter einem Winkel von 70 bis 90° gegenüber dem Reifenäquator (C) angeordnet sind, einem Gürtel (7), der radial außenseitig von der Karkasse (6) und innenseitig von einer Lauffläche (2) angeordnet ist, und einem Wulstkernreiter (9), der zwischen jedem nach oben umgeschlagenen Bereich (6b) und dem Hauptbereich (6a) der Karkasse angeordnet ist und sich radial nach außen einer von jedem Wulstkern (5) erstreckt, wobei die Höhe (Ht) der nach oben umgeschlagenen Bereiche (6b) der Karkasse von der Wulstgrundlinie mehr als das 0,2-fache und weniger als das 0,5-fache der Höhe (Hs) der Laufflächenkanten (E1, E2) von der Wulstgrundlinie beträgt, wobei der Gürtel eine Mehrzahl von axial unterteilten Stücken (7a, 7b, 7c, 7d, 7e, 7f) aufweist, wobei jedes Gürtelstück eine Spiralwicklung eines Bandes (10) aus Gummi, in dem mindestens ein Kord (11) eingebettet ist, mit einem kleinen Neigungswinkel gegenüber dem Reifenäquator (C) in derselben Wicklungsrichtung wie das andere Gürtelstück oder die anderen Gürtelstücke (7a bis 7f) ist,
dadurch **gekennzeichnet,**
daß vier Gürtelstücke (7c bis 7d) vorgesehen sind, von denen jeweils zwei auf jeder Seite der Mitte des Reifens (C) angeordnet sind und daß die Korde von allen Gürtelstücken (7a bis 7f) in derselben Richtung um den Reifen gewunden sind und daß die Höhe (Ha) der radial äußeren Kante des Wulstkernreiters (9) von der Wulstgrundlinie mehr als das 0,2-fache und nicht mehr als das 0,5-fache der Laufflächenkantenhöhe (Hs) beträgt.

2. Ein Reifen nach Anspruch 1,
dadurch **gekennzeichnet,**
daß die Gürtelbreite mehr als das 0,7-fache und weniger als das 1,0-fache der Laufflächenbreite (Wt) gemessen entlang der gekrümmten Oberfläche der Lauffläche zwischen den Kanten (E1, E2) beträgt.

3. Ein Reifen nach Anspruch 1 oder 2,
dadurch **gekennzeichnet,**
daß der Elastizitätsmodul der Korde in dem Streifen größer als 600 kg/cm$^2$ ist.

4. Ein Reifen nach irgendeinem der Ansprüche 1 bis 3,
dadurch **gekennzeichnet,**
daß die radiale Höhe des Wulstkernreiters (9) gemessen von der Wulstgrundlinie (15) mehr als das 0,2-fache und weniger als das 0,5-fache von der Laufflächenkantenhöhe (Hs) beträgt.

5. Ein Verfahren zur Herstellung eines Gürtels (7) für einen Motorradreifen, wobei der Gürtel (7) an der radialen Außenseite einer Karkasse (6) und innenseitig einer Lauffläche (2) angeordnet ist und eine Mehrzahl von axial unterteilten Stücken (7a, 7f) aufweist, wobei das Verfahren gekennzeichnet ist durch die Schritte, daß ein Ende von jedem der Bänder (10) aus Gummi an axial beabstandeten Stellen an einer drehbar montierten zylindrischen Reifenkarkasse befestigt werden, wobei in jedem Band (10) aus Gummi mindestens ein Gürtelkord (11) entlang seiner Längsrichtung vorgesehen ist, wobei die axial beabstandeten Stellen von jedem Band (10) axial auf derselben Seite des Reifens liegen, und daß die Karkasse gedreht wird, während Bänder (10) in Richtung der zylindrischen Reifenkarkasse zugeführt werden und gleichzeitig die zugeführten Bänder seitwärts von der Karkasse entlang der Achse der Reifenfläche bewegt werden, so daß alle Bänder (10) in derselben Wicklungsrichtung gewickelt werden und alle Gürtelkorde (11) in den Wicklungen geringe Neigungswinkel von nicht mehr als 10° gegenüber dem Reifenäquator haben.

**Revendications**

1. Pneumatique à carcasse radiale pour motocyclette, comprenant deux tringles (5) placées chacune dans une partie de talon (4), une carcasse (6) placée entre les parties de talon (4) et repliée autour des tringles (5), la carcasse (6) ayant au moins une nappe de câblés disposée radialement suivant un angle de 70 à 90° par rapport à l'équateur (C) du pneumatique, une ceinture (7) placée radialement à l'extérieur de la carcasse (6) et à l'intérieur d'une bande de roulement (2), et une pointe (9) de bourrage de talon placée entre chaque partie repliée (6b) et la partie principale (6a) de la carcasse et disposée radialement à l'extérieur de chaque tringle (5), la hauteur (Ht) des parties repliées de carcasse (6b) par rapport à l'axe de référence des talons dépassant 0,2 fois la hauteur (Hs) des bords (E1, E2) de la bande de roulement par rapport à l'axe de référence de talon mais étant inférieure à 0,5 fois cette hauteur, la ceinture comportant plusieurs pièces divisées axialement (7a, 7b, 7c, 7d, 7e, 7f), chaque pièce de ceinture étant formée par un enroulement spiralé d'un ruban (10) de caoutchouc dans lequel est enrobé au moins un câblé (11) avec un petit angle d'inclinaison par rapport à l'équateur (C) du pneumatique dans le même sens d'enroulement que l'autre ou les autres pièces (7a-7f) de ceinture, caractérisé en ce qu'il comporte quatre pièces (7c-7d) de ceinture, deux de chaque côté du centre du pneumatique (C), et les câblés de toutes les pièces (7a-7f) de ceinture sont enroulés dans le même sens autour du pneumatique, et la hauteur (Ha) du bord radialement externe de la pointe (9) de bourrage de talon, par rapport à l'axe de référence de talon, dépasse 0,2 fois la hauteur (Hs) des bords de la bande de roulement mais ne dépasse pas 0,5 fois cette hauteur.

2. Pneumatique selon la revendication 1, caractérisé en ce que la largeur de la ceinture n'est pas inférieure à 0,7 fois ni supérieure à 1,0 fois la largeur (Wt) de la bande de roulement mesurée le long de la surface courbe de la bande de roulement entre les bords (E1 et E2).

3. Pneumatique selon la revendication 1 ou 2, caractérisé en ce que le module d'élasticité des câblés de la bande dépasse $6.10^9$ Pa (600 kgf/cm$^2$).

4. Pneumatique selon l'une des revendications 1 à 3, caractérisé en ce que la hauteur radiale de la pointe (9) de bourrage de talon mesurée par rapport à l'axe (15) de base de talon dépasse 0,2 fois et est inférieur à 0,5 fois la hauteur (Hs) du bord de la bande de roulement.

5. Procédé de fabrication d'une ceinture (7) destinée à un pneumatique de motocyclette, la ceinture (7) étant disposée radialement à l'extérieur d'une carcasse (6) et à l'intérieur d'une bande de roulement (2) et comprenant plusieurs pièces divisées axialement (7a, 7f), le procédé étant caractérisé en ce qu'il comprend les étapes suivantes : la fixation d'une première extrémité de chacun des rubans (10) de caoutchouc à des positions axialement espacées sur une carcasse d'un pneumatique cylindrique montée afin qu'elle puisse tourner, chaque ruban (10) de caoutchouc ayant au moins un câblé (11) de ceinture dans sa direction longitudinale, les positions axialement distantes de chaque ruban (10) se trouvant axialement du même côté du pneumatique, et l'entraînement en rotation de la carcasse avec transmission des rubans (10) vers la carcasse du pneumatique cylindrique et, simultanément, déplacement des rubans transmis en direction latérale par rapport à la carcasse suivant l'axe de la face du pneumatique, si bien que tous les rubans (10) sont enroulés dans un même sens d'enroulement, et tous les câblés (11) de ceinture des enroulements ont de petits angles d'inclinaison ne dépassant pas 10° par rapport à l'équateur du pneumatique.

Fig.1

EP 0 477 016 B1

*Fig.2*

*Fig.3*

# Fig.4

# Fig.5

## Fig.7

## Fig.8

## Fig.6